# EUROPÄISCHE PATENTSCHRIFT

(11) **EP 2 627 547 B1**
(45) Veröffentlichungstag und Bekanntmachung des Hinweises auf die Patenterteilung: **17.09.2014**
(21) Anmeldenummer: 11739039.3
(22) Anmeldetag: 28.07.2011
(51) Int. Cl.: B60T 17/22, G05G 1/38

(54) **PEDALSTÜTZE ZUM SPANNEN EINES BREMSPEDALS UND VERFAHREN ZUR ÜBERPRÜFUNG DER DICHTHEIT EINES HYDRAULISCHEN BREMSSYSTEMS**
PEDAL ACTUATOR AND HYDRAULIC BRAKE SYSTEM TIGHTNESS TEST METHOD
PEDALERIE ET PROCEDE DE CONTROLE DE L'ETANCHEITE D'UN SYSTÈME DE FREIN HYDRAULIQUE

(30) Priorität: 27.07.2011 DE 102011079881; 13.10.2010 DE 102010042415
(43) Veröffentlichungstag der Anmeldung: 21.08.2013
(73) Patentinhaber: Continental Teves AG & Co. oHG, 60488 Frankfurt (DE)
(72) Erfinder: NEU, Thorsten, 65594 Runkel (DE); LANG, Franziska, 61130 Nidderau (DE)
(86) Internationale Anmeldenummer: PCT/EP2011/062960
(87) Internationale Veröffentlichungsnummer: WO 2012/048923

(56) Entgegenhaltungen:
- EP-A1- 2 330 003
- DE-A1- 4 037 688
- DE-A1- 10 327 693
- FR-A1- 2 793 204
- US-A1- 2003 062 767

## Beschreibung

Die Erfindung betrifft eine Pedalstütze zum Spannen eines Bremspedals sowie ein Verfahren zur Überprüfung der Dichtheit einer oder mehrerer Komponenten eines hydraulischen Bremssystems.

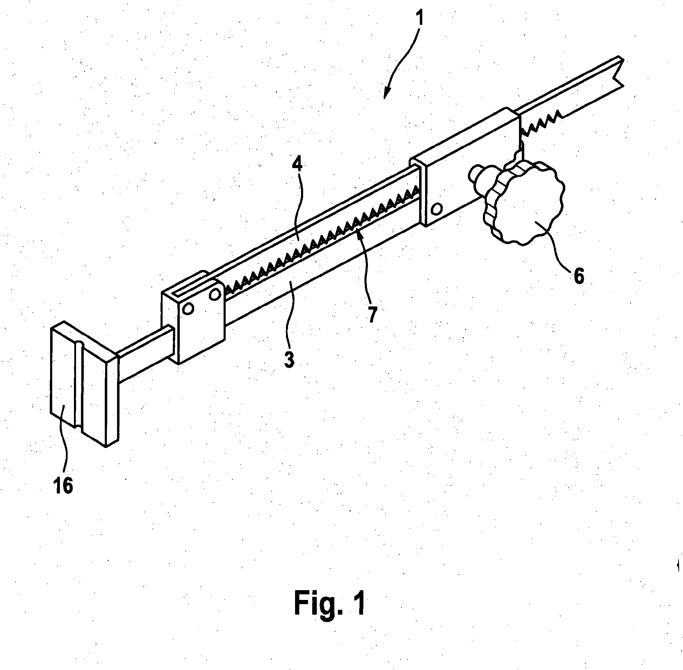

Eine in Fig. 1 gezeigte Pedalstütze ist beispielsweise von der Marke ATE bekannt. Mit der bekannten Pedalstütze (auch Pedalfeststeller genannt) kann das Bremspedal belastet und in der gewünschten Position fixiert werden. Das ermöglicht es beispielsweise dem Werkstattfachmann, einen konstanten Pedalweg über längere Zeit aufrecht zu halten.

Die Pedalstütze stellt ein Hilfsmittel für Dichtheitsprüfungen am hydraulischen Bremssystem (Bremskraftverstärker, Hauptzylinder, Abschalter etc.) sowie für das Prüfen und Einstellen von Bremskraftreglern oder Bremskräftbegrenzern dar.

Zum Druckaufbau wird die Pedalstütze zwischen Fahrersitz und Bremspedal gespannt. Die Länge der Pedalstütze wird mit Hilfe eines Handrades eingestellt, das auf eine Zahnstange wirkt. Ist die gewünschte Spannung erreicht, arretiert eine Sperrklinke die Länge der Pedalstütze und garantiert einen konstanten Pedalweg und bei einem dichten Bremssystem einen konstanten Druck.

EP 2330003 A1 beschreibt eine gattunsgemäße Aktuatorvorrichtung mit Kraftsensor alleine.

Als nachteilig bei den bekannten Pedalstützen wird angesehen, dass keine Information über die Feststellkraft oder deren Veränderung während des Abstützvorganges vorliegt.

Aufgabe der Erfindung ist es, dass durch bauliche als auch verfahrenstechnische Maßnahmen eine verbesserte Pedalstütze und eine vereinfachte und verbesserte Dichtheitsprüfung erreicht werden kann.

Diese Aufgabe wird erfindungsgemäß für eine Pedalstütze der angegebenen Art mit den kennzeichnenden Merkmalen der Patentansprüche 1, 5 und 6 gelöst.

Gemäß Patentanspruch 1 wird die Aufgabe dadurch gelöst, dass eine Auswerte- und Ansteuereinheit integriert vorgesehen ist, welche zum Bereitstellen einer Betätigungskraft einen Aktuator ansteuert, wobei ein Wegsensor sowie ein Kraftsensor vorgesehen sind, mittels welchen ein Verfahrensweg und eine Betätigungskraft des Aktuators sensierbar sind. Somit besteht der Vorteil der Erfindung darin, dass die Dichtheit einer Bremsenkomponente z.B. im Kundendienst oder einer Werkstatt in einfacher, verbesserter Weise nachgewiesen werden kann.

Weiter werden gemäß Patentanspruch 5 und 6 jeweils ein Verfahren zur Überprüfung der Dichtheit einer oder mehrerer Komponenten eines hydraulischen Bremssystems, insbesondere eines Bremskraftverstärkers, eines Hauptzylinders oder eines hydraulischen Abschalter, mittels einer erfindungsgemäßen:Pedalstütze vorgeschlagen.

Weitere Merkmale, Vorteile und Anwendungsmöglichkeiten der Erfindung gehen aus den Unteransprüchen und der nachfolgenden Beschreibung eines Ausführungsbeispiels anhand von Zeichnungen hervor.

Es zeigen:
- Figur 1: eine bekannte Pedalstütze der Marke ATE;
- Figur 2: eine erfindungsgemäße Pedalstütze und
- Figur 3: ein Blockschaltbild der erfindungsgemäßen Pedalstütze gemäß Fig. 2.

Fig. 1 zeigt eine bekannte Pedalstütze 1 zum Spannen eines Bremspedals 2, insbesondere bei Kraftfahrzeugen, um den bei Dichtheitsprüfungen von Komponenten der Bremsanlage notwendigen Druck aufzubringen.
Als Komponenten der hydraulischen Bremsanlage können beispielsweise Bremskraftverstärker, Hauptzylinder, Abschalter etc. vorgesehen sein.
Die Pedalstütze 1 umfasst ein durch Ein- und Ausfahren die Länge der Pedalstütze 1 veränderndes bewegliches Teil 4 und ein festes Teil 3, welches sich mit einem Abstützelement 16 an dem Bremspedal 2 abstützt. Das bewegliche Teil 4 ist dagegen an einem Abstützpunkt 5 des Kraftfahrzeuges abgestützt.

Derartige Pedalstützen 1 sind beispielsweise von der Marke ATE bekannt. Mit der bekannten Pedalstütze (auch Pedalfeststeller genannt) kann das Bremspedal 2 belastet und in der gewünschten Position fixiert werden. Das ermöglicht es beispielsweise dem Werkstattfachmann, einen konstanten Pedaldruck über längere Zeit aufrecht zu halten.

Zum Druckaufbau wird die. Pedalstütze 1 zwischen dem Fahrersitz bzw. einem Abstützpunkt 5 und dem Bremspedal 2 gespannt. Die Länge der Pedalstütze 1 wird mit Hilfe eines Handrades 6 eingestellt, das auf eine an dem beweglichen Teil 4 ausgebildete Zahnstange 7 wirkt. Ist die gewünschte Spannung erreicht, arretiert eine Sperrklinke 8 die Länge der Pedalstütze 1 und garantiert somit den konstanten Druck im Bremssystem. Hierbei wird als nachteilig angesehen, dass keine Information über die Feststellkraft oder deren Veränderung während des Abstützvorganges vorliegt.

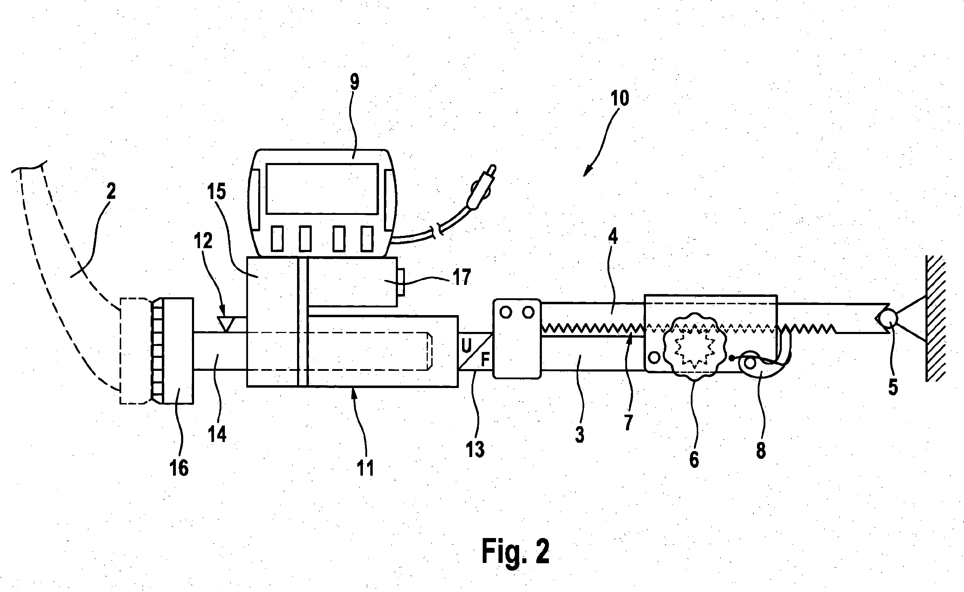

Um diesen Nachteil der bekannten Pedalstützen 1 auszuschließen, weist die in Fig. 2 dargestellte erfindungsgemäße Pedalstütze 10 eine integrierte Auswerte- und Ansteuereinheit 9 auf, welche zum Bereitstellen einer Betätigungskraft einen Elektromotor 17 eines Aktuator 11 ansteuert.

Des Weiteren sind ein Wegsensor 12 sowie ein Kraftsensor 13 vorgesehen, mittels welchen ein Verfahrensweg und eine Betätigungskraft des Aktuators 11 sensierbar sind.

Der Aktuator 11 kann beispielsweise als Linear-Elektrozylinder mit einem linear verschiebbaren Kolben 14 vorgesehen sein, dessen Verfahrensweg von dem Wegsensor 12, welcher in einfacher Weise an einem Gehäuse 15 des Aktuators 11 angeordnet bzw. in diesem integriert ist, erfasst wird. An dem Kolben 14 ist das Abstützelement 16 befestigt, welches an dem Bremspedal 2 anliegt.

Wie aus Fig. 2 ersichtlich ist der Kraftsensor 13 zwischen dem Gehäuse 15 des Aktuators 11 und dem festen Teil 3 angeordnet und wandelt die Pedalfeststellkraft der Pedalstütze 10 in ein elektrisches Signal um, welches von der elektrischen, programmierbaren Auswerte- und Ansteuereinheit 9 gemäß den nachfolgend beschriebenen Verfahren in eine Information über die Dichtheit einer (oder mehrerer) Bremsenkomponenten umgesetzt wird.

Die Überprüfung der Dichtheit einer oder mehrere Komponenten des hydraulischen Bremssystems, erfolgt in den nachfolgend aufgeführten Schritten:
Zuerst wird eine manuelle Initialkraft erzeugt, indem die Pedalstütze 10 zwischen dem Bremspedal 2 und dem Abstützpunkt 5 des Kraftfahrzeuges positioniert und das bewegliche Teil 4 mittels des Handrades 6 gegenüber dem festen Teil 5 verfahren wird, so dass die Pedalstütze 10 durch das Einrasten der Sperrklinke 8 gesichert zwischen dem Bremspedal und einem Abstützpunkt eingespannt ist. Ab dieser manuell erzeugten Initialkraft kann eine automatisierte Funktion der Pedalstütze 10 gestartet werden.

Dabei sind zwei Funktionen - "konstante Kraft" und "konstanter Weg" - vorgesehen.

In der Funktion "konstante Kraft" erfolgt zunächst ein Einstellen einer Betätigungskraft über die Auswerte- und Ansteuereinheit 9, welche den Aktuator 11 ansteuert, so dass dieser die Betätigungskraft aufbaut.
Es erfolgt dann eine Messung eines Verfahrensweges x des Aktuators 11 bzw. seines Kolbens 14 über eine bestimmte Messzeit t. Mittels eines geeigneten Algorithmus wird anschließend die Leckagerate aus dem Produkt von dem Verfahrensweg x und einem Durchmesser eines Kolbens der Komponente berechnet.
Die Leckagerate der Komponente in der Auswerte- und Ansteuereinheit 9 angezeigt wird.

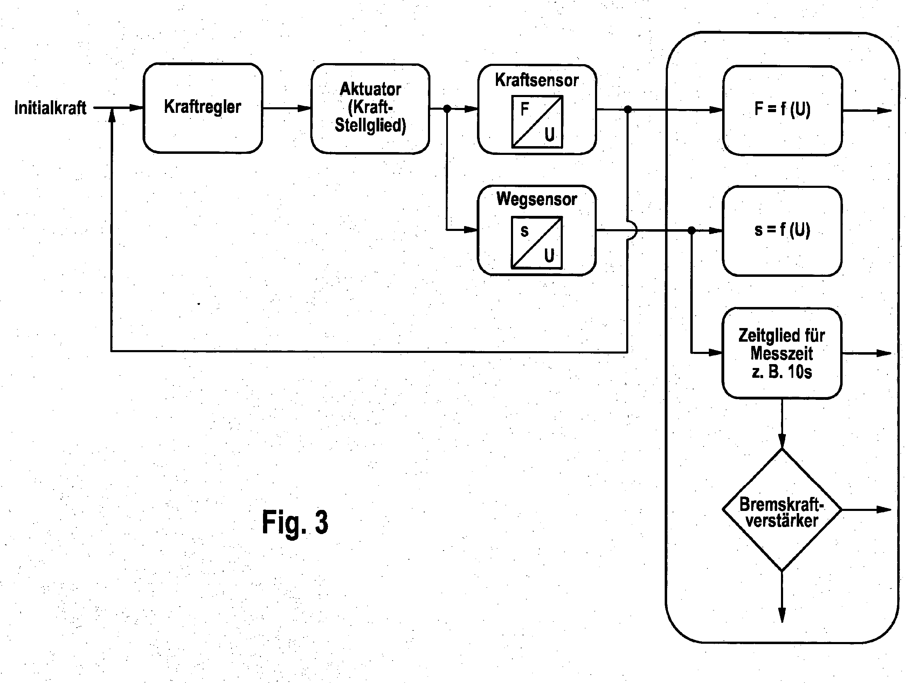

In Fig. 3 ist ein entsprechendes Blockschaltbild der Funktion "konstante Kraft" dargestellt.

In der Funktion "konstanter Weg" erfolgt zunächst das Einstellen eines Start-Kraftwertes der Betätigungskraft über die Auswerte- und Ansteuereinheit 9. Ist diese Regelgröße hinreichend genau startet die Messung. Dabei wird die Aktuatorposition bzw. die Position des Kolbens 14 unter Messung des Wegsensors 12 gehalten und der Kraftabfall über eine bestimmte Messzeit t gemessen. Mittels eines geeigneten Algorithmus wird anschließend die Leckageräte der Komponente aus dem Kraftabfall über die Messzeit t gemessen und die Leckagerate in der Auswerte- und Ansteuereinheit 9 angezeigt.

Über eine Kraftfahrzeug-Typen-Datenbasis, die in der Auswerte- und Ansteuereinheit 9 hinterlegt ist, wird in beiden Fällen auf der Auswerte- und Ansteuereinheit 9 eingeblendet, ob die zulässigen Werte überschritten sind und somit ein reklamierbarer Fehler vorliegt oder ob sich das Kraftfahrzeug-Verhalten im zulässigen Bereich befindet.

### Bezugszeichenliste

- 1: bekannte Pedalstütze
- 2: Bremspedal
- 3: festes Teil
- 4: bewegliches Teil
- 5: Abstützpunkt
- 6: Handrad
- 7: Zahnstange
- 8: Sperrklinke
- 9: Auswerte- und Ansteuereinheit
- 10: erfindungsgemäß Pedalstütze
- 11: Aktuator
- 12: Wegsensor
- 13: Kraftsensor
- 14: Kolben
- 15: Gehäuse
- 16: Abstützelement
- 17: Elektromotor

## Patentansprüche

1. Pedalstütze (10) zum Spannen eines Bremspedals (2), insbesondere bei Kraftfahrzeugen, um den bei Dichtheitsprüfungen von Komponenten der Bremsanlage notwendigen Druck aufzubringen, umfassend ein durch Ein- und Ausfahren die Länge der Pedalstütze (10) veränderndes bewegliches Teil (4) und ein festes Teil (3), wobei das bewegliche Teil (4) an einem Abstützpunkt (5) des Kraftfahrzeuges abgestützt ist, **dadurch gekennzeichnet, dass** eine Auswerte- und Ansteuereinheit (9) integriert vorgesehen ist, welche zum Bereitstellen einer Betätigungskraft einen Aktuator (11) ansteuert, wobei ein Wegsensor (12) sowie ein Kraftsensor (13) vorgesehen sind, mittels welchen ein Verfahrensweg und eine Betätigungskraft des Aktuators (11) sensierbar sind.

2. Pedalstütze (10) nach Anspruch 1, **dadurch gekennzeichnet, dass** der Aktuator (11) als Linear-Elektrozylinder mit einem linear verschiebbaren.,Kolben (14) vorgesehen ist.

3. Pedalstütze (10) nach Anspruch 1 oder 2, **dadurch gekennzeichnet, dass** der Kraftsensor (13) zwischen einem Gehäuse (15) des Aktuators (11) und dem festen Teil (3) angeordnet ist.

4. Pedalstütze nach Anspruch 3, **dadurch gekennzeichnet, dass** der Wegsensor (12) an dem Gehäuse (15) des Aktuators (11) angeordnet ist.

5. Verfahren zur Überprüfung der Dichtheit einer oder mehrerer Komponenten.eines hydraulischen Bremssystems, insbesondere eines Bremskraftverstärkers, eines Hauptzylinders oder eines hydraulischen Abschalters, mittels einer Pedalstütze (10) gemäß einem der vorangegangenen Ansprüche 1 bis 4, **gekennzeichnet durch** die Schritte
a. Erzeugung einer manuell erzeugten Initialkraft, indem die Pedalstütze zwischen einem Bremspedal (2) und einem Abstützpunkt (5) des Kraftfahrzeuges positioniert und das bewegliche Teil (4) mittels eines Handrades (6) gegenüber dem festen Teil (3) verfahren wird, so dass die Pedalstütze (10) zwischen dem Bremspedal (2) und dem Abstützpunkt (5) eingespannt ist,
b. Einstellen einer Betätigungskraft über die Auswerte- und Ansteuereinheit (9),
c. Aufbau der Betätigungskraft über den Aktuator (11),
d. Messung eines Verfahrensweges (x) des Aktuators (11) über eine bestimmte Messzeit (t),
e. Berechnung der Leckagerate aus dem Produkt von dem Verfahrensweg (x) und einem Durchmesser eines Kolbens der Komponente.

6. Verfahren zur Überprüfung der Dichtheit einer oder mehrerer Komponenten eines hydraulischen Bremssystems, insbesondere eines Bremskraftverstärkers, eines Hauptzylinders oder eines hydraulischen Abschalters, mittels einer Pedalstütze (10) gemäß einem der vorangegangenen Ansprüche 1 bis 4, **gekennzeichnet durch** die Schritte
a. Erzeugung einer manuell erzeugten Initialkraft, indem die Pedalstütze zwischen einem Bremspedal (2) und einem Abstützpunkt (5) des Kraftfahrzeuges positioniert und das.bewegliche Teil (4) mittels eines Handrades (6) gegenüber dem festen Teil (3) verfahren wird, so dass die Pedalstütze (10) zwischen dem Bremspedal (2) und dem Abstützpunkt (5) eingespannt ist,
b. Einstellen eines Start-Kraftwertes der Betätigungskraft über die Auswerte- und Ansteuereinheit (9),
c. Halten der Aktuatorposition unter Messung des Wegsensors (12),
d. Messung des Kraftabfalls über eine bestimmte Messzeit (t),
e. Berechnung der Leckagerate der Komponente aus dem Kraftabfall über die Messzeit (t).

7. Verfahren zur Überprüfung der Dichtheit einer Komponente eines hydraulischen Bremssystems nach Anspruch 5 oder 6, **dadurch gekennzeichnet, dass** eine Leckagerate der Komponente in der Auswerte- und Ansteuereinheit (9) angezeigt wird.

## Claims

1. Pedal prop (10) for imposing a load on a brake pedal (2), in particular in motor vehicles, in order to apply the pressure necessary during sealing tests on components of the brake system, comprising a movable part (4), which changes the length of the pedal prop (10) by moving in and out, and a fixed part (3), wherein the movable part (4) is supported on a point of support (5) on the motor vehicle, **characterized in that** an evaluation and control unit (9) is provided as an integrated element, which controls an actuator (11) in order to provide an actuating force, wherein a displacement sensor (12) and a force sensor (13) are provided, by means of which a travel and an actuating force of the actuator (11) can be sensed.

2. Pedal prop (10) according to Claim 1, **characterized in that** the actuator (11) is provided as a linear electric cylinder with a linear-motion piston (14).

3. Pedal prop (10) according to Claim 1 or 2, **characterized in that** the force sensor (13) is arranged between a housing (15) of the actuator (11) and the fixed part (3).

4. Pedal prop according to Claim 3, **characterized in that** the displacement sensor (12) is arranged on the housing (15) of the actuator (11).

5. Method for checking the sealing of one or more components of a hydraulic brake system, in particular of a brake booster, of a master cylinder or of a hydraulic cut-out, by means of a pedal prop (10) according to one of preceding Claims 1 to 4, **characterized by** the following steps:
a. generation of a manually produced initial force by positioning the pedal prop between a brake pedal (2) and a point of support (5) on the motor vehicle and moving the movable part (4) relative to the fixed part (3) by means of a hand wheel (6), with the result that the pedal prop (10) is clamped between the brake pedal (2) and the point of support (5),
b. setting an actuating force by means of the evaluation and control unit (9),
c. buildup of the actuating force by means of the actuator (11),
d. measurement of a travel (x) of the actuator (11) over a certain measurement time (t),
e. calculation of the leakage rate from the product of the travel (x) and a diameter of a piston of the component.

6. Method for checking the sealing of one or more components of a hydraulic brake system, in particular of a brake booster, of a master cylinder or of a hydraulic cut-out, by means of a pedal prop (10) according to one of preceding Claims 1 to 4, **characterized by** the following steps:
a. generation of a manually produced initial force by positioning the pedal prop between a brake pedal (2) and a point of support (5) on the motor vehicle and moving the movable part (4) relative to the fixed part (3) by means of a hand wheel (6), with the result that the pedal prop (10) is clamped between the brake pedal (2) and the point of support (5),
b. setting of a starting force value for the actuating force by means of the evaluation and control unit (9),
c. holding the actuator position while measuring the displacement sensor (12),
d. measurement of the drop in force over a certain measurement time (t),
e. calculation of the leakage rate of the component from the drop in force over the measurement time (t).

7. Method for checking the sealing of a component of a hydraulic brake system according to Claim 5 or 6, **characterized in that** a leakage rate of the component is indicated in the evaluation and control unit (9).

## Revendications

1. Support de pédale (10) pour serrer une pédale de frein (2), en particulier dans des véhicules automobiles afin d'appliquer la pression nécessaire lors d'essais d'étanchéité des composants de l'installation de freinage, comprenant une partie mobile (4) faisant varier la longueur du support de pédale (10) lors de l'enfoncement et du relâchement et une partie fixe (3), la partie mobile (4) étant supportée au niveau d'un point d'appui (5) du véhicule automobile, **caractérisé en ce qu'**il est prévu une unité d'analyse de commande (9) intégrée, qui commande un actionneur (11) pour fournir une force d'actionnement, un capteur de déplacement (12) ainsi qu'un capteur de force (13) étant prévus, au moyen desquels une course de déplacement et une force d'actionnement de l'actionneur (11) peuvent être détectées.

2. Support de pédale (10) selon la revendication 1, **caractérisé en ce que** l'actionneur (11) est prévu sous forme de cylindre électrique linéaire avec un piston déplaçable linéairement (14).

3. Support de pédale (10) selon la revendication 1 ou 2, **caractérisé en ce que** le capteur de force (13) est disposé entre un boîtier (15) de l'actionneur (11) et la partie fixe (3).

4. Support de pédale selon la revendication 3, **caractérisé en ce que** le capteur de déplacement (12) est disposé au niveau du boîtier (15) de l'actionneur (11).

5. Procédé de contrôle de l'étanchéité d'un ou plusieurs composants d'un système de freinage hydraulique, en particulier d'un servofrein, d'un cylindre principal ou d'un dispositif de coupure hydraulique, au moyen d'un support de pédale (10) selon l'une quelconque des revendications 1 à 4, **caractérisé par** les étapes suivantes :
a. génération d'une force initiale produite manuellement en positionnant le support de pédale entre une pédale de frein (2) et un point d'appui (5) du véhicule automobile et en déplaçant la partie mobile (4) au moyen d'une roue à main (6) par rapport à la partie fixe (3), de telle sorte que le support de pédale (10) soit serré entre la pédale de frein (2) et le point d'appui (5),
b. ajustement d'une force d'actionnement par le biais de l'unité d'analyse et de commande (9),
c. application de la force d'actionnement par le biais de l'actionneur (11),
d. mesure d'une course de déplacement (x) de l'actionneur (11) pendant un temps de mesure déterminé (t),
e. calcul du taux de fuite à partir du produit de la course de déplacement (x) et d'un diamètre d'un piston des composants.

6. Procédé de contrôle de l'étanchéité d'un ou plusieurs composants d'un système de freinage hydraulique, en particulier d'un servofrein, d'un cylindre principal ou d'un dispositif de coupure hydraulique, au moyen d'un support de pédale (10) selon l'une quelconque des revendications 1 à 4, **caractérisé par** les étapes suivantes :
a. génération d'une force initiale produite manuellement en positionnant le support de pédale entre une pédale de frein (2) et un point d'appui (5) du véhicule automobile et en déplaçant la partie mobile (4) au moyen d'une roue à main (6) par rapport à la partie fixe (3), de telle sorte que le support de pédale (10) soit serré entre la pédale de frein (2) et le point d'appui (5),
b. ajustement d'une valeur de force de démarrage de la force d'actionnement par le biais de l'unité d'analyse et de commande (9),
c. maintien de la position de l'actionneur en mesurant avec le capteur de déplacement (12),
d. mesure de la diminution de la force pendant un temps de mesure déterminé (t),
e. calcul du taux de fuite des composants à partir de la diminution de la force sur le temps de mesure (t).

7. Procédé de contrôle de l'étanchéité d'un composant d'un système de freinage hydraulique selon la revendication 5 ou 6, **caractérisé en ce qu'**un taux de fuite des composants est indiqué dans l'unité d'analyse et de commande (9).
